# EUROPÄISCHE PATENTSCHRIFT

(11) **EP 3 067 577 B1**
(45) Veröffentlichungstag und Bekanntmachung des Hinweises auf die Patenterteilung: **19.06.2019**
(21) Anmeldenummer: 16401019.1
(22) Anmeldetag: 15.03.2016
(51) Int. Cl.: F16C 17/03, F16C 33/10

(54) **KIPPSEGMENTLAGER**
TILT SEGMENT BEARING
PALIER À PATINS OSCILLANTS

(30) Priorität: 12.03.2015 DE 102015103668
(43) Veröffentlichungstag der Anmeldung: 14.09.2016
(73) Patentinhaber: B&S Zerspantechnik GmbH, 87527 Sonthofen (DE)
(72) Erfinder: Brutscher, Michael, 87527 Sonthofen (DE); Strehle, Peter, 85727 Sonthofen (DE); Noll, Andreas, 87545 Burgberg (DE)
(74) Vertreter: Wiese, Gerhard

(56) Entgegenhaltungen:
- DE-A1-102011 105 762
- JP-A- 2010 151 283
- US-A- 5 738 447
- US-A1- 2010 177 999

## Beschreibung

Die vorliegende Erfindung betrifft ein Kippsegmentlager, insbesondere ein Radialkippsegmentlager, das zum Lagern einer Welle bestimmt ist und hierfür insbesondere Öl als Schmiermittel zwischen Welle und Kippsegmenten vorhalten kann, gemäß dem Oberbegriff des Anspruchs 1.

### Technisches Gebiet

Die Lagerung von Wellen, die insbesondere für hohe Drehgeschwindigkeiten ausgelegt sind, erfolgt vorteilhafter Weise durch Kippsegmentlager. In einem Lagergrundkörper, der zylinderförmig gestaltet sein kann, werden zwei oder mehr Kippsegmente gelagert.

Zur Reibungsminimierung und zur Kühlung wird ein Schmiermittel, insbesondere Öl eingesetzt, das zwischen den Kippsegmenten und einer Oberfläche der zu lagernden Welle einen Schmierfilm bildet.

Das Schmiermittel nimmt die durch die Reibung zwischen Welle und Lager entstehende Verlustwärme auf, die von der Welle und dem Lager abgeführt werden muss.

### Stand der Technik

Bekannte Kippsegmentlager für schnell drehende Wellen sind aufgrund einer großen Teilevielfalt äußerst aufwändig zu montieren. Außerdem werden viele Lager aufgrund einer nicht optimalen Trennung des abgeführten warmen Schmiermittels vom zugeführten Kaltschmiermittel insgesamt mit zu viel Schmiermittel betrieben.

Aus der US 5 738 447 A ist ein gattungsgemäßes Kippsegmentlager bekannt. Eine zwischen zwei Kippsegmenten angeordnete Schmiermittelaustauschvorrichtung setzt sich dort aus wenigsten drei verschiedenen Bauteilen zusammen, die aufwändig einzeln gefertigt und dann zusammenmontiert werden müssen.

Aus der DE 10 2011 105 762 A1 ist eine dort als Warmölausleiter bezeichnete Schmiermittelaustauschvorrichtung bekannt, bei der sich eine der Zufuhreinrichtung entsprechende Öleinspritzeinrichtung über die gesamte axiale Länge des Warmölausleiters erstreckt. Es sind zwei sich ebenfalls über die gesamte axiale Länge des Warmölausleiters erstreckende Abfuhreinrichtungen vorgesehen, von denen die erste in Umfangsrichtung der Öleinspritzeinrichtung vorgelagert und die zweite in Umfangsrichtung der Öleinspritzeinrichtung nachgelagert ist. Durch eine unvermeidbare Vermischung verringern sich die Kühlwirkung und der Wirkungsgrad der bekannten Vorrichtung.

### Aufgabenstellung

Der Erfindung liegt die Aufgabe zugrunde, ein Kippsegmentlager zu schaffen, das bei einfachem Aufbau leicht montierbar ist und eine optimale Schmier- und Kühlwirkung entfaltet.

### Erfindungsbeschreibung

Die erfindungsgemäße Aufgabe wird durch ein Kippsegmentlager nach Anspruch 1 gelöst. Vorteilhafte Ausgestaltungen sind den Unteransprüchen zu entnehmen.

Die Erfindung zeichnet sich dadurch aus, dass die Schmiermittelaustauschvorrichtung mit der in sie integrierten wenigstens einen Zufuhreinrichtung und der in sie integrierten wenigstens einen Abfuhreinrichtung einteilig ausgebildet ist, wodurch sich der Montageaufwand signifikant reduziert. Außerdem ist die Schmiermittelaustauschvorrichtung mittels wenigstens eines ebenfalls an ihr integrierten Formschlusselements formschlüssig mit wenigstens einer Ausnehmung am Lagergrundkörper verbindbar, so dass auch die Montage und Demontage der Schmiermittelaustauschvorrichtung am Lagergrundkörper wesentlich vereinfacht wird.

Vorzugsweise sind zwei gegenüberliegend an einem Boden der Schmiermittelaustauschvorrichtung T-förmig angeordnete rippenförmige Formschlusselemente zum formschlüssigen Eingriff in zwei komplementär dazu geformte Ausnehmungen am Lagergrundkörper vorgesehen, die ein leichtes parallel geführtes Einschieben der Schmiermittelaustauschvorrichtungen in den Lagergrundkörper erlauben.

Die Erfindung sieht vor, dass die Zufuhreinrichtung in einem axial gesehen mittleren Bereich der Schmiermittelaustauschvorrichtung angeordnet ist. Hier ist zum einen mittels wenigstens einer Bohrung auf kurzem Wege ein direkter Kontakt zu einem zentral am Lagergrundkörper vorgesehenen Ringkanal möglich, über den die Schmiermittelzufuhr erfolgt. Zum anderen wird durch die Anordnung der Zufuhreinrichtung in einem axial gesehen mittleren Bereich der Schmiermittelaustauschvorrichtung in den axial gesehen benachbarten Bereichen genügend Platz für die wenigstens eine Abfuhreinrichtung bereitgestellt, insbesondere für zwei zu beiden Seiten des axial gesehen mittleren Bereichs angeordnete Abfuhreinrichtungen, die bevorzugt einen größeren Querschnitt als die Zufuhreinrichtung aufweisen. Der größere Querschnitt der Abfuhreinrichtungen ist deswegen vorteilhaft, weil das erwärmte Schmieröl ohne Überdruck abgeführt werden muss.

An jeder Schmiermittelaustauschvorrichtung sind die Abfuhreinrichtungen in Drehrichtung der Welle den Zufuhreinrichtungen vorgelagert, so dass zunächst das Warmschmiermittel abgeführt und dann unmittelbar anschließend das Kaltschmiermittel dem Spalt zwischen Lager und Welle zugeführt wird.

Vorteilhaft weisen die Zufuhreinrichtungen mehrere in Richtung zur Welle hin in unterschiedliche Richtungen ausmündende Bohrungen auf, die bevorzugt in eine in Richtung der Längsachse verlaufende, in die Schmiermittelaustauschvorrichtung integrierte Schmiermittelkammer ausmünden. Das kalte Schmiermittel wird über den Lagergrundkörper in einen Nahbereich zur Welle zu einer Schmiermittelleitleiste geführt. Von dort wird es mittels einer oder mehrerer Bohrungen in oder vor einen Segmenteingriff gespritzt, der sich an einem Randbereich eines Kippsegments befindet. Die Schmiermittelkammer dient zur Verteilung des Schmiermittels über nahezu die volle Länge der Schmiermittelaustauschvorrichtung.

Das Kippsegmentlager weist mehrere einzelne Kippsegmente auf, die so gestaltet sind, dass sie die zumindest im Bereich des Lagers zylindrische Welle zumindest an einem Teil ihres Umfangs mit einer Lagerfläche radial abstützen.

Besonders bevorzugt werden die Schmiermittelaustauschvorrichtungen in ihrer axialen Position von wenigstens einem Schmiermittelleitdeckel begrenzt, in den bevorzugt auch Bohrungen bzw. Öffnungen für die weitere Abfuhr des erwärmten Schmiermittels aus dem Kippsegmentlager integriert sind.

Die Zufuhreinrichtung ist bevorzugt für ein geringfügiges Überangebot des unter einem Druck von etwa 1,5 bis 4,0 bar zuführbaren Kaltschmiermittels ausgebildet. Das Überangebot des Kaltschmiermittels bildet im Bereich jeder Schmiermittelaustauschvorrichtung zusätzlich zu einer dort angeordneten, die Schmiermittelströme mechanisch trennenden Schmiermittelleitleiste eine hydraulische Sperre für den abzuführenden drucklosen, warmen Schmiermittelstrom, um eine Vermischung mit dem zugeführten kalten Schmiermittelstrom wirksam zu unterbinden.

Der Effekt der Schmiermittelleitleiste entfaltet seine positive Wirkung noch besser, wenn die Dimensionen zwischen Welle und den an sie anschließenden Bauteilen aufeinander abgestimmt sind. Ein Abstand der Schmiermittelleitleiste zu der Welle kann dabei bevorzugt sehr gering gehalten werden, etwa in der Größenordnung des 10-fachen des radialen Lagerspiels zwischen den Lagerflächen der Kippsegmente und der Welle.

Mittels der Erfindung werden das Vermischen von Kalt- und Warmöl wirksam vermieden, der Warmölübertrag von Kippsegment zu Kippsegment minimiert, die Strömungsverluste reduziert und somit das Temperaturniveau bzw. der Wirkungsgrad des Radialkippsegmentlager verbessert. Ferner wird im Vergleich zu herkömmlichen Radialkippsegmentlagern die Anzahl der verwendeten Bauteile deutlich reduziert.

### Figurenkurzbeschreibung

Die Erfindung wird nachfolgend anhand der Zeichnung beschrieben. Es zeigt:
- Fig. 1: ein Kippsegmentlager ohne die Welle in einer perspektivischen Ansicht,
- Fig. 2: eine Frontansicht des Kippsegmentlagers gemäß Fig. 1,
- Fig. 3: eine Draufsicht auf das Kippsegmentlager gemäß Fig. 1,
- Fig. 4: einen Teilquerschnitt durch ein Kippsegmentlager im Bereich einer Schmiermittelaustauschvorrichtung,
- Fig. 5: einen Teil-Längsschnitt im Bereich eines Schmiermittelleitdeckels mit radialem Austritt,
- Fig. 6: eine vergrößerte Detaildarstellung gemäß Detail-Kreis A aus Fig. 4,
- Fig. 7: einen Teil-Längsschnitt einer alternativen Ausführungsform eines Schmiermittelleitdeckels ähnlich Fig. 5 jedoch mit axialem Austritt,
- Fig. 8: eine perspektivische Ansicht auf die Zufuhrseite einer Schmiermittelaustauschvorrichtung,
- Fig. 9: eine perspektivische Ansicht auf die Abfuhrseite einer Schmiermittelaustauschvorrichtung, und
- Fig. 10: einen Längsschnitt durch eine Schmiermittelaustauschvorrichtung im Bereich der Zufuhrseite.

### Figurenbeschreibung

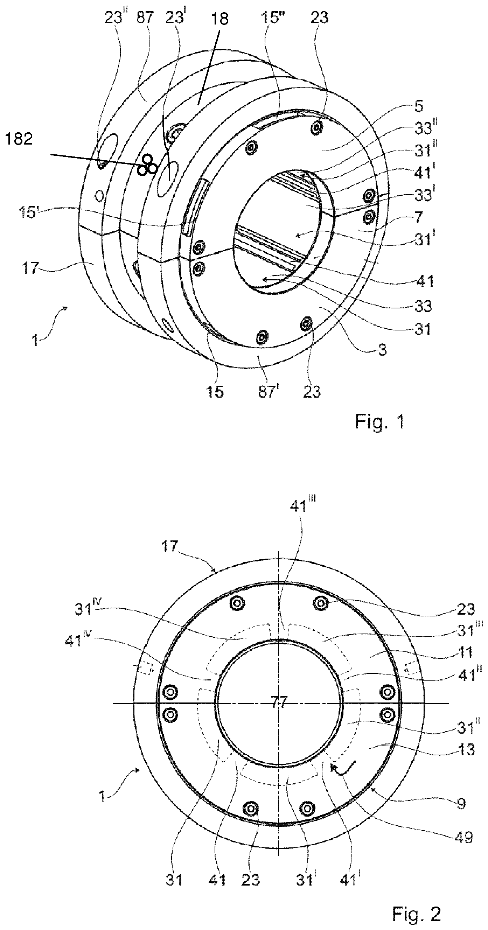

In dem in den Figuren 1 bis 10 gezeigten Kippsegmentlager 1 wird besonders bevorzugt als Schmiermittel ein Öl verwendet. Wenn in der nachfolgenden Beschreibung Bauteilbezeichnungen den Begriff "Schmiermittel" enthalten, sind davon stets bevorzugt Öl aber auch andere fließfähige Schmier- und oder Kühlmittel umfasst.

Das beschriebene (Radial-) Kippsegmentlager 1 ist beispielsweise zur Radiallagerung einer Welle 19 bestimmt. Ein mittig in zwei Hälften geteilter Lagergrundkörper 17 weist eine zentrale Durchgangsbohrung auf. Die beiden Hälften des Lagergrundkörpers 17 sind durch Befestigungsmittel 23^{I}, 23^{II} - die insbesondere durch versenkbare Schrauben gebildet werden - miteinander zu einem geschlossenen zylindrischen Körper verbindbar. Der Lagergrundkörper 17 umgibt mehrere Kippsegmente 31, 31^{I}, 31^{II}, 31^{III}, 31^{IV}.

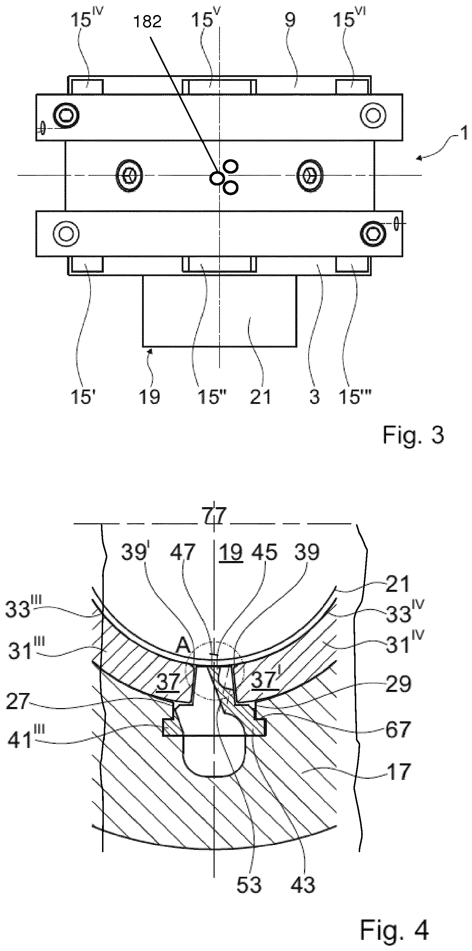

Figur 1 zeigt in einer 3-D-Darstellung ein Kippsegmentlager 1 in einer Ansicht von außen. Das Kippsegmentlager 1 ist als Lager für eine in Fig. 1 nicht dargestellte Welle 19 (siehe Figur 3) bestimmt. Der in zwei Hälften geteilte Lagergrundkörper 17 umgibt mehrere Kippsegmente 31, 31^{I}, 31^{II}, 31^{III}, 31^{IV}. Aus Fig. 2 ist ersichtlich, dass das dargestellte Ausführungsbeispiel fünf derartige Kippsegmente 31, 31^{I}, 31^{II}, 31^{III}, 31^{IV} umfasst. Die Kippsegmente 31, 31^{I}, 31^{II}, 31^{III}, 31^{IV} weisen jeweils eine der Welle 19 zugewandte, konkav gekrümmte Lagerfläche 33, 33^{I}, 33^{II}, 33^{III}, 33^{IV} auf.

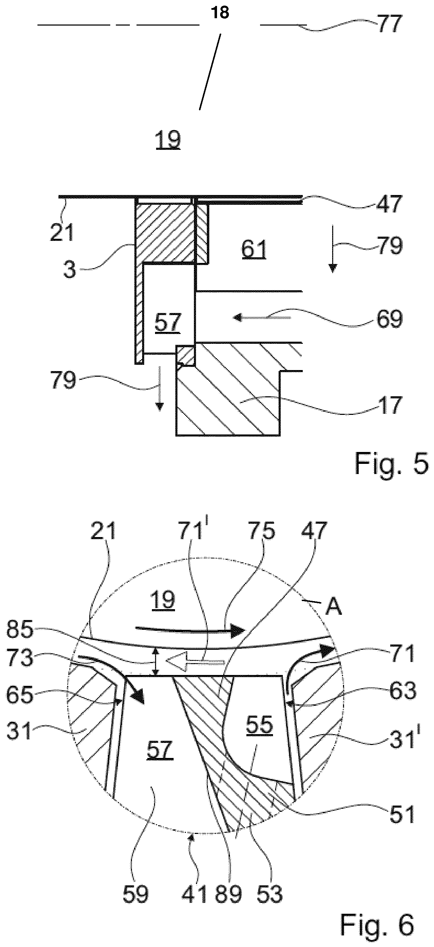

Eine Wellenoberfläche 21 der Welle 19 wird von den Kippsegmenten 31, 31^{I}, 31^{II}, 31^{III}, 31^{IV} derart gelagert, dass sich ein Schmiermittelfilm eines Schmiermittels 71, 73 (siehe Figur 6) zwischen den Lagerflächen 33, 33^{I}, 33^{II}, 33^{III}, 33^{IV} der Kippsegmente 31, 31^{I}, 31^{II}, 31^{III}, 31^{IV} und der Wellenoberfläche 21 ausbilden kann.

Der Lagergrundkörper 17 hat außen einen als Ringkanal 18 ausgebildeten mittleren Bereich, der beidseitig von im Durchmesser größeren Kragen 87, 87^{I} eingefasst wird. An die Kragen, 87, 87^{I} schließt sich axial nach außen jeweils ein Schmiermittelleitdeckel 3 an. Der Schmiermittelleitdeckel 3 ist ein aus zwei Teilen 5, 7 zusammengesetzter Ring. Die als Halbringe ausgebildeten Hälften 5, 7 des Schmiermittelleitdeckels 3 sind über Befestigungsmittel 23 an dem Lagergrundkörper 17 befestigt, insbesondere angeschraubt. Ebenso wie der Schmiermittelleitdeckel 3 aus den zwei Teilen 5, 7, setzt sich auch der Lagergrundkörper 17 aus zwei halbschalenartigen Teilen zusammen, wobei deren Trennfugen bevorzugt deckungsgleich zu denen des Schmiermittelleitdeckels 3 angeordnet sind. Der Schmiermittelleitdeckel 3 lässt in seiner Mitte eine Öffnung für den Durchtritt der Welle 19 frei (siehe Figur 3).

Im Bereich des Ringkanals 18 des Lagergrundkörpers 17 ist wenigstens eine Bohrung 182 eingearbeitet, über welche unter einem Förderdruck von etwa 1,5 bis 4,0 bar eine Schmiermittelzufuhr zu den Kippsegmenten 31, 31^{I}, 31^{II}, 31^{III}, 31^{IV} bzw. zu den zwischen diesen angeordneten Schmiermittelaustauschvorrichtungen 41, 41^{I}, 41^{II}, 41^{III}, 41^{IV} erfolgt. In dem Schmiermittelleitdeckel 3 sind mehrere - pro Schmiermittelaustauschvorrichtung mindestens eine - Öffnung(en) 15, 15^{I}, 15^{II} eingeformt, die zur Abfuhr von Schmiermittel aus dem Kippsegmentlager 1 dienen.

Figur 2 zeigt ein Kippsegmentlager 1 in einer Seitenansicht. Ein zweiter Schmiermittelleitdeckel 9 des Kippsegmentlagers 1 schließt auf der zum Schmiermittelleitdeckel 3 axial gegenüber liegenden Seite stirnseitig den Lagergrundkörper 17 ab. Der zweite Schmiermittelleitdeckel 9 besteht aus einem ersten Teil 11 und einem zweiten Teil 13. Zwischen den einzelnen Kippsegmenten 31, 31^{I}, 31^{II}, 31^{III}, 31^{IV} befinden sich die Schmiermittelaustauschvorrichtungen 41, 41^{I}, 41^{II}, 41^{III}, 41^{IV}. Das Kippsegmentlager 1 gemäß Figur 2 weist fünf voneinander beabstandete Kippsegmente 31, 31^{I}, 31^{II}, 31^{III}, 31^{IV} auf. Durch die Befestigungsmittel 23 werden die Teile 11, 13 des Schmiermittelleitdeckels 9 an dem Lagergrundkörper 17 in Position gehalten. Die Schmiermittelaustauschvorrichtungen 41, 41^{I}, 41^{II}, 41^{III}, 41^{IV} sind radial auf die Rotationsachse 77 der Welle hin ausgerichtet. Durch die Schmiermittelaustauschvorrichtungen 41, 41^{I}, 41^{II}, 41^{III}, 41^{IV} wird frisches Schmiermittel 71, 71^{I} auf die Wellenoberfläche 21 aufgebracht, während zeitgleich höher temperiertes Schmiermittel 73 durch die Schmiermittelaustauschvorrichtungen 41, 41^{I}, 41^{II}, 41^{III}, 41^{IV} ausgeleitet wird. Für die Zuleitung des Schmiermittels 71 befindet sich im Inneren jeder Schmiermittelaustauschvorrichtung 41, 41^{I}, 41^{II}, 41^{III}, 41^{IV} eine Zufuhreinrichtung 49, die mit den Bohrungen 182 im Ringkanal 18 kommuniziert.

In der Ansicht nach Figur 3 des Kippsegmentlagers 1 sind im Ringkanal 18 exemplarisch drei Bohrungen 182 für die Zufuhr von Schmieröl und ein Teil der Öffnungen 15^{I}, 15^{II}, 15^{III}, 15^{IV}, 15^{V}, 15^{VI} in den beiden Schmiermittelleitdeckeln 3 bzw. 9 zu sehen, die für die Ausleitung des erwärmten und/oder verbrauchten Schmiermittels aus dem Kippsegmentlager 1 dienen.

Eine ausschnittsweise Darstellung des Inneren des Kippsegmentlagers 1 ist in Figur 4 gezeigt. Figur 4 zeigt einen Ausschnitt aus dem Lagergrundkörper 17 und zwei Kippsegmente 31^{III} und 31^{IV}. Die Kippsegmente 31^{III} und 31^{IV} weisen Lagerflächen 33^{III} und 33^{IV} auf, die der Wellenoberfläche 21 der Welle 19 zugewandt sind.

Zwischen den Kippsegmenten 31^{III}, 31^{IV} befindet sich eine Schmiermittelaustauschvorrichtung 41^{III}. Die Schmiermittelaustauschvorrichtung 41^{III} hat einen im Vergleich zu ihrem Kopf 45 breiteren Boden 43. Der Boden 43 bildet das radial weiter außen liegende Ende und der Kopf 45 bildet das radial weiter innen liegende Ende der Schmiermittelaustauschvorrichtung 41^{III}. Für die Aufnahme der Schmiermittelaustauschvorrichtung 41^{III} weist der Lagergrundkörper jeweils gegenüberliegend zwei rechteckige, senkrecht zu einer Radialen angeordnete Ausnehmungen 27 auf. Die Ausnehmungen 27 weisen im Bereich der zu den Kippsegmenten 31^{III}, 31^{IV} hin weisenden Ausnehmungsinnenseiten 29 einen Vorsprung auf. Die Ausnehmungen 27 bilden gemeinsam mit diesen Vorsprüngen eine nach innen offene T-Nut.

Die Ausnehmungen 27 dienen zum formschlüssigen Umgreifen von entsprechend komplementär geformten rippenartigen Formschlusselementen 67, die am Boden 43 jeder Schmiermittelaustauschvorrichtung 41, 41^{I}, 41^{II}, 41^{III}, 41^{IV} integral ausgebildet sind. Die Ausnehmungen 27 am Lagergrundkörper 17 und die rippenartigen Formschlusselemente 67 am Boden 43 der Schmiermittelaustauschvorrichtung 43 ermöglichen ein einfaches axiales Einschieben der kompletten einstückig hergestellten Schmiermittelaustauschvorrichtung 43 in den Lagergrundkörper nach Art eines Nut-und-Federsystems oder einer T-Nut-Führung. Selbstverständlich sind hier auch andere formschlüssige Eingriffsformen möglich, wie beispielsweise eine im Querschnitt trapezförmige Schwalbenschwanz-Führung. Durch die Formschlusselemente 67 werden die Schmiermittelaustauschvorrichtungen 41, 41^{I}, 41^{II}, 41^{III}, 41^{IV} vor einem Herausrutschen oder Herausfallen in Richtung auf die Rotationsachse 77 der Welle 19 gehindert.

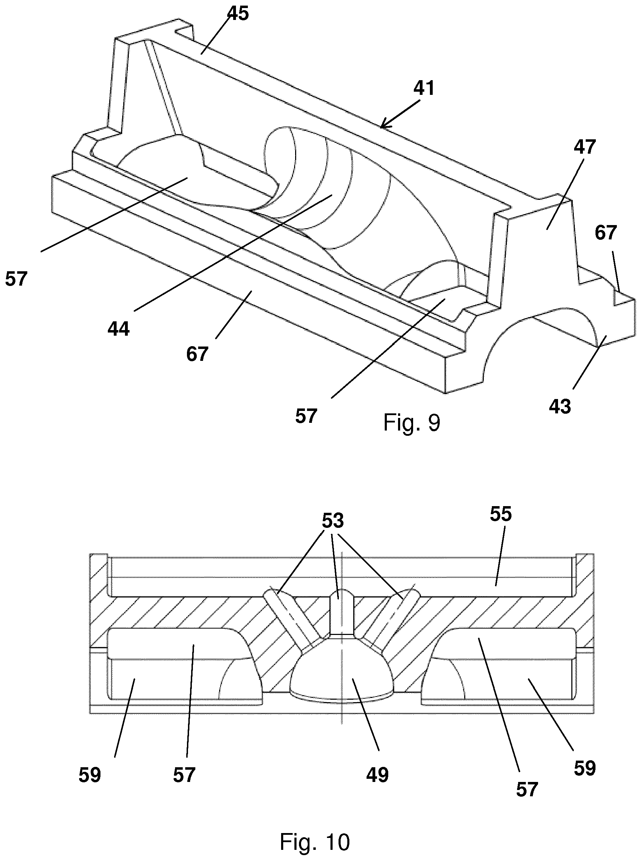

Die Schmiermittelaustauschvorrichtung 41^{III} hat mindestens eine Bohrung 53, idealerweise - wie in Fig. 10 dargestellt - beispielsweise drei Bohrungen 53, durch die frisches Schmiermittel zur Wellenoberfläche 21 der Welle 19 gebracht werden kann. Die Schmiermittelaustauschvorrichtung 41^{III} weist eine Schmiermittelleitleiste 47 am Ende des Kopfes 45 auf. Durch die Schmiermittelleitleiste 47 kann der Durchtritt von heißem Schmiermittel 73 von einer Abfuhreinrichtung 57 auf der Austrittsseite der Schmiermittelaustauschvorrichtung 41 in den Bereich der Schmiermittelkammer 55 auf der Zufuhrseite wirksam verhindert werden.

Der Bereich einer Schmiermittelaustauschvorrichtung 41, 41^{I}, 41^{II}, 41^{III}, 41^{IV} stellt strömungstechnisch eine Trennung zwischen Zulauf 71 und Ablauf 73 eines Schmiermittels dar. Der in Figur 4 gezeigte Bereich der Schmiermittelaustauschvorrichtung 41^{III} ist in Figur 6 zur Erläuterung weiterer Details entsprechend des Detail-Kreises A vergrößert dargestellt.

Figur 5 zeigt einen Ausschnitt aus dem Kippsegmentlager 1 nach Figur 1, der den Lagergrundkörper 17, den Schmiermittelleitdeckel 3 und die Welle 19 umfasst. Die Schmiermittelleitleiste 47 befindet sich gegenüber der Oberfläche 21 der Welle 19. Von der Welle 19 abgewandt ist ein Schmiermittelablaufschacht 61 in der Schmiermittelaustauschvorrichtung 41^{III} ausgebildet. Durch den Schmiermittelablaufschacht 61 wird Schmiermittel in radialer Richtung 79 nach außen in den Lagergrundkörper 17 hin geleitet. Das Schmiermittel 69 gelangt in weiterer Folge, z. B. auf Grund der Rotation der Welle 19 und der dadurch bewirkten Beschleunigung und Bewegung des Schmiermittels 69 in einen Randbereich des Lagergrundkörpers 17. Der Randbereich des Lagergrundkörpers 17 ist durch den Schmiermittelleitdeckel 3 verschlossen. Der Schmiermittelleitdeckel 3 hat jedoch eine Abfuhreinrichtung 57 integriert. Durch die Abfuhreinrichtung 57 wird das Schmiermittel 69 in radialer Richtung 79 aus dem Kippsegmentlager 1 ausgleitet. Das Schmiermittel 69 wird nach Verlassen der Oberfläche 21 der Welle 19 mehrfach umgelenkt, um anschließend in radialer Richtung 79 aus dem Schmiermittelleitdeckel 3 herausgeführt zu werden. Das Schmiermittel 69 bewegt sich aufgrund der Fliehkraft selbsttätig von der Rotationsachse 77 der Welle 19 weg nach außen.

In dem vergrößerten Ausschnitt aus Fig. 4 gemäß Figur 6 kann der Schmiermittelfluss leichter nachvollzogen werden. Die Schmiermittelaustauschvorrichtung 41^{III} ist ein radial auf die Welle 19 hin zulaufender Körper. Der sich verjüngende Körper der Schmiermittelaustauschvorrichtung 41^{III} weist eine Einleitungseinrichtung 51 und einen Ausleitungskanal 59 auf. Der Querschnitt des Ausleitungskanals 59 vergrößert sich mit zunehmendem radialem Abstand von der Welle 19. Der Ausleitungskanal 59 ist Teil der Abfuhreinrichtung 57. Der Ausleitungskanal 59 ist von einer Innenkanalwand 89 begrenzt. Die Einleitungeinrichtung 51 mündet in eine Schmiermittelkammer 55. Zum Heranführen des Kaltschmiermittels 71 in die Schmiermittelkammer 55 weist jede Schmiermittelaustauschvorrichtung 41, 41^{I}, 41^{II}, 41^{III}, 41^{IV} wenigstens eine die Schmiermittelaustauschvorrichtung 41 durchsetzende Bohrung 53 auf. Die Bohrung 53 bzw. die Einleitungseinrichtung 51 erstreckt sich in eine erste Richtung. Der Ausleitungskanal 59 bzw. dieser Teil der Abfuhreinrichtung 57 erstreckt sich in eine zweite Richtung. Erste Richtung und zweite Richtung bilden einen Winkel zueinander. Der Ausleitungskanal 59 ist strömungsgünstig dem ausgeleiteten Warmschmiermittel 73 zugewendet, also entgegen der Drehrichtung 75 der Welle 19 gerichtet, während die Bohrungen 53 eine Neigung in Drehrichtung 75 der Welle 19 aufweisen.

Es versteht sich, dass in der leistenartigen Schmiermittelaustauschvorrichtung 41 auch mehrere, insbesondere gleichartige Bohrungen 53 eingearbeitet sein können, die in ihrem Austrittswinkel unterschiedlich orientiert sind, wie in Fig. 10 dargestellt.

Zwischen der Schmiermittelkammer 55 und dem Ausleitungskanal 59 ist ein Steg als Teil der Schmiermittelaustauschvorrichtung 41 stehengeblieben, der die Aufgabe einer Schmiermittelleitleiste 47 übernimmt. Kaltschmiermittel 71 gelangt aus der Schmiermittelkammer 55 entlang des Kippsegments 31^{I} an die Oberfläche 21 der Welle 19. Die Schmiermittelkammer 55 befindet sich in einem ersten Bereich 63 der Schmiermittelaustauschvorrichtung 41, insbesondere ihres Kopfes. Hiervon separiert befindet sich in einem zweiten Bereich 65 in der Schmiermittelaustauschvorrichtung 41 der Ausleitungskanal 59. Über den Ausleitungskanal 59 kann Warmschmiermittel 73 durch den zweiten Bereich der Schmiermittelaustauschvorrichtung 41 hindurch von dem Kippsegment 31 weggeführt werden. Die Schmiermittelkammer 55 hält, insbesondere unter Druck, soviel Schmiermittel vor, dass sich zwei unterschiedlich gerichtete Kaltschmiermittelströme der Kaltschmiermittel 71, 71^{I} ausbilden können. Der Strom des Kaltschmiermittels 71^{I} bildet eine hydraulische Barriere für das Warmschmiermittel 73 und lenkt das Warmschmiermittel 73 in den Ausleitungskanal 59. Die Welle 19 bildet mit ihrer Wellenoberfläche 21 einen Abstand 85 zum Kopf 45 der Schmiermittelaustauschvorrichtungen 41, 41^{I}, 41^{II}, 41^{III}, 41^{IV}. Der Kopf 45 der Schmiermittelaustauschvorrichtungen 41, 41^{I}, 41^{II}, 41^{III}, 41^{IV} weist dabei gegenüber den Lagerflächen 33, 33^{I}, 33^{II}, 33^{III}, 33^{IV} der Kippsegmente 31, 31^{I}, 31^{II}, 31^{III}, 31^{IV} einen etwas größeren Abstand von der Wellenoberfläche 21 auf.

Die Welle 19 rotiert in eine Drehrichtung 75. Ein Punkt auf der Welle 19 passiert zunächst den zweiten Bereich 65 der Schmiermittelaustauschvorrichtung 41 und anschließend erst den ersten Bereich 63. In Drehrichtung wird zuerst Warmschmiermittel 73 von der Oberfläche 21 der Welle 19 entfernt und anschließend Kaltschmiermittel 71 von der Oberfläche 21 der Welle 19 mitgeschleppt.

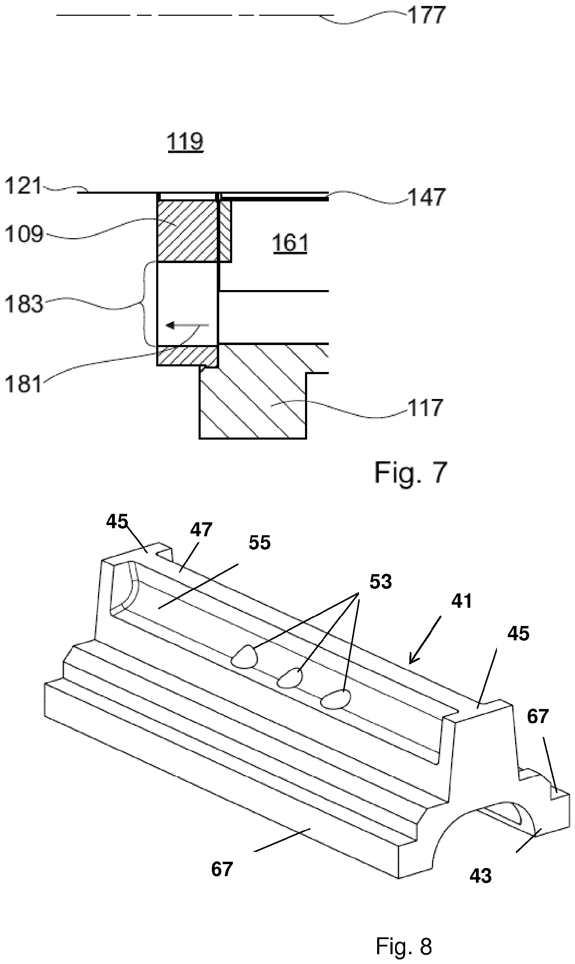

In Figur 7 ist eine ähnliche Konfiguration im Bezug auf eine Rotationsachse 177 einer Welle 119 dargestellt wie in Figur 5. Ein Schmiermittelablaufschacht 161 reicht in Querrichtung über den größten Abschnitt eines Lagergrundkörpers 117. Der Schmiermittelablaufschacht 161 mündet in einer Ablassöffnung 183 des seitlichen Schmiermitteldeckels 109. Das Schmiermittel kann bei dieser Konfiguration aus dem Inneren des Lagers in paralleler Richtung 181 zur Rotationsachse 177 austreten.

Aus den Figuren 8 bis 10 ist ersichtlich, dass ein Mittelteil 44 der Schmiermittelaustauschvorrichtung 41 die Zufuhreinrichtung 49 enthält, von der die im Ausführungsbeispiel drei Bohrungen 53 in unterschiedlichem Winkel in die Schmiermittelkammer 55 ausmünden. Zu beiden Seiten des Mittelteils 44 sind auf der anderen Seite großvolumige Abfuhreinrichtungen 57 mit strömungsgünstig gerundeten Wänden in der Schmiermittelaustauschvorrichtung 41 ausgebildet, die eine effiziente und turbolenzoptimierte Schmierölabfuhr des abströmenden, warmen Schmiermittels ermöglicht.

Die in den einzelnen Figuren gezeigten Ausgestaltungsmöglichkeiten lassen sich auch untereinander in beliebiger Form verbinden.

Der nachfolgende Text entspricht der Beschreibung der Erfindung im Prioritätsdokument. Dort wurden teilweise abweichende Begriffe (z.B. "Öl" statt "Schmiermittel") und Bezugszeichen verwendet. Zur Herstellung der Konsistenz sind im folgenden Text die neuen Bezugszeichen verwendet und die ursprünglich im Prioritätsdokument verwendeten Bezugszeichen in Klammern dahinter gesetzt:
Ein Radialkippsegmentlager wird zur Lagerung einer Welle verwendet, um die Drehung der Welle um ihre Rotationsachse zu ermöglichen. Die wesentlichen Bauteile des Radial-Kippsegmentlagers 1 sind
- Lagergrundkörper 17, 117 (#1)
- Kippsegment 31, 31^{I}, 31^{II}, 31^{III}, 31^{IV} (#2)
- Schmiermittelleitleiste 47, 147 (#3)
- Schmiermittelleitdeckel 3 (#4)

Das im Radial-Kippsegmentlager 1 integrierte Ölleitsystem ist nicht als einzelnes Bauteil anzusehen, sondern setzt sich aus den Bauteilen Lagergrundkörper 17, 117 (#1), Schmiermittelleitleiste 47, 147 (#3) und Schmiermittelleitdeckel 3 (#4) zusammen. Als zentrales Bauteil des Ölleitsystems ist die Schmiermittelleitleiste 47, 147 (#3) anzusehen, welche im Raum zwischen zwei Kippsegmenten 31, 31^{I}, 31^{II}, 31^{III}, 31^{IV} (#2) positioniert ist und das zulaufende, kalte Schmieröl 71, 71^{I} vom ablaufenden, warmen Schmieröl 73 trennt.

Für ein funktionsfähiges Radial-Kippsegmentlager 1 wird ein Ölschmierfilm benötigt, um die Reibung zwischen Welle 19, 119 und Kippsegmenten 31, 31^{I}, 31^{II}, 31^{III}, 31^{IV} (#2) zu minimieren und die durch Reibung entstandene Wärme abzuleiten. Das kalte Schmieröl 71, 71^{I} (#5) wird über den Lagergrundkörper 17, 117 (#1) in die Schmiermittelleitleiste 47, 147 (#3) geführt, von welcher aus das Schmieröl mittels einer oder mehreren Bohrungen 53 (#7) in den Segmenteingriff 39 (#8) gespritzt wird. Der Abstrahlwinkel der Bohrungen 53 (#7) kann hierbei von senkrecht zur Rotationsachse 77, 177 (#9) bis zu einer angewinkelten und strömungsoptimierten Position in Richtung Segmenteingriff 39 (#8) ausgeführt werden.

Die Schmiermittelleitleiste 47, 147 (#3) ist im Bereich vor dem Segmenteingriff 39 (#8) als Schmiermittelkammer 55 (#10) ausgeführt, welche neben der direkten Einspritzung durch die Bohrungen 53 (#7) ein flächiges Verteilen des zulaufenden, kalten Schmieröls 71, 71^{I} über die ganze Breite des Segmenteingriffs 39 (#8) sicherstellt.

Das zugeführte Schmiermittel 71, 71^{I} (#5, #16) wird zwischen Welle 19, 119 und Kippsegment 31, 31^{I}, 31^{II}, 31^{III}, 31^{IV} (#2) in Drehrichtung 75 (#11) zum Segmentende 37 (#12) gefördert und durch die Reibleistung erwärmt. Am Segmentende 37 (#12) wird das ablaufende, warme Schmiermittel 73 (#6) durch die Fliehkraft von der Welle 19, 119 weg in den Schmiermittelablaufschacht 61, 161 (#13) geleitet.

Der schneideförmig gestaltete Schmiermittelablaufschacht 61, 161 (#13) - berührungslos zur Welle 19, 119 ausgeführt - und die vorhandenen Querschnitte unterstützen hierbei eine effiziente und turbolenzfreie Ableitung des Schmiermittels 73 (#6).

Durch die gezielte Ölführung im Schmiermittelablaufschacht 61, 161 (#13) wird ein zusätzliches Erwärmen des Kippsegmentes 31, 31^{I}, 31^{II}, 31^{III}, 31^{IV} (#2) durch das ablaufende Schmieröl verhindert.

Form und Querschnitt des Schmiermittelablaufschachts 61, 161 (#13) in der Schmiermittelleitleiste 47, 147 (#3) werden konsequent im Lagergrundkörper 17, 117 (#1) weitergeführt. Das ablaufende, warme Schmiermittel 73 (#6) wird abschließend über die Schmiermittelleitdeckel 3 (#4) aus dem Radial-Kippsegmentlager 1 herausgeleitet. Dies kann sowohl in senkrechter Richtung zur Rotationsachse 77, 177 als auch - entgegen der Abbildung - in axialer, paralleler Richtung (#15) erfolgen.

### Erzielte Vorteile:

- Räumliche Trennung von Schmierölzu- und Schmierölabfuhr verhindert das Vermischen von Warm- und Kaltöl.
- Gezielte Schmierölversorgung über die komplette Kippsegmentbreite.
- Effiziente, turbolenzfreie Schmierölabfuhr.

### OPTION

Wenngleich der größte Anteil des ablaufenden, warmen Schmieröls 73 durch den Schmiermittelablaufschacht 61, 161 (#13) abgeleitet wird, ist ein Warmölübertrag von Kippsegment zu Kippsegment (#2) aufgrund des erforderlichen Spiels zwischen Welle 19, 119 und Schmiermittelleitleiste 47, 147 nicht zu vermeiden. Diesem Sachverhalt kann bei der Auslegung des Kippsegmentlagers 1 Rechnung getragen werden. Dazu wird dem Radial-Kippsegmentlager 1 geringfügig mehr Schmieröl zugeführt wie für den eigentlichen Betriebspunkt notwendig wäre. Das überschüssig zugeführte Schmieröl 71^{I} (#16) wird dann gegen die Drehrichtung 75 (#11) in den Schmiermittelablaufschacht 61, 161 (#13) gefördert und verhindert somit den Warmölübertrag von Kippsegment zu Kippsegment 31, 31^{I}, 31^{II}, 31^{III}, 31^{IV} (#2).

### Erzielte Vorteile:

- Optimierung des möglichen Warmölübertrags von Kippsegment zu Kippsegment 31, 31^{I}, 31^{II}, 31^{III}, 31^{IV} (#2)

### Montage und Service

Die Schmiermittelleitleiste 47, 147 (#3) ist als einzelnes Bauteil ausgeführt und wird mittels einem Nut-/Federsystem 67 (#17) montiert. Die geometrische Form der Schmiermittelleitleiste 47, 147 (#3) verhindert zudem ein mögliches Herausfallen der Kippsegmente 31, 31^{I}, 31^{II}, 31^{III}, 31^{IV} (#2) bei Montage/Transport, eine zusätzliche Sicherung - mittels Haltestifte bzw. Halteschrauben bei anderen Radialkippsegmentlagern ausgeführt - ist nicht erforderlich. Eine Schmiermittelleitleiste 47, 147 (#3) ersetzt somit bis zu fünf Einzelbauteile anderer Radialkippsegmentlager. Montage- und Servicearbeiten sind somit weniger umfangreich und mögliche Montagefehler werden grundsätzlich vermieden.

### Erzielte Vorteile:

- Weniger Bauteile
- geringerer Montage-/Demontageaufwand

Der beschriebene Typ Kippsegmentlager zeichnet sich durch eine hohe Montage- und Servicefreundlichkeit aus. Die Schmiermittelleitleiste bzw. die Schmiermittelaustauschvorrichtung ist als ein einzelnes Bauteil ausgeführt. Die Schmiermittelaustauschvorrichtung wird mittels Formschlusselementen ("eines Nut-/Federsystem") montiert. Die Schmiermittelaustauschvorrichtung ist seitlich in den Grundkörper, den Lagergrundkörper einsteckbar und durch die anschließend benachbart zu deren Enden angeordneten Schmiermittelleitdeckel axial fixierbar. Montage- und Servicearbeiten sind somit weniger umfangreich. Mögliche Montagefehler werden vermieden, allein schon aufgrund der reduzierten Anzahl an Bauteilen eines Kippsegmentlagers mit einem Lagergrundkörper gemäß der vorliegenden Erfindung.

### Bezugszeichenliste

- 1: Kippsegmentlager
- 3: erster Schmiermittelleitdeckel
- 5: erster Teil, insbesondere erste Hälfte des ersten Schmiermittelleitdeckels
- 7: zweiter Teil, insbesondere zweite Hälfte des ersten Schmiermittelleitdeckels
- 9, 109: zweiter Schmiermittelleitdeckel
- 11: erster Teil, insbesondere erste Hälfte des zweiten Schmiermittelleitdeckels
- 13: zweiter Teil, insbesondere zweite Hälfte des zweiten Schmiermittelleitdeckels
- 15, 15^{I}, 15^{II}, 15^{III}, 15^{IV}, 15^{V}, 15^{VI}: Öffnung im Schmiermittelleitdeckel zur Ausleitung des Schmiermittels
- 17, 117: Lagergrundkörper
- 18: Ringkanal
- 182: Bohrung
- 19, 119: Welle
- 21, 121: Wellenoberfläche
- 23, 23^{I}, 23^{II}: Befestigungsmittel eines ersten Typs, eines zweiten Typs und eines dritten Typs, insbesondere Innensechskantschrauben mit unterschiedlichen Gewinden
- 29: Ausnehmungsinnenseite
- 31, 31^{I}, 31^{II}, 31^{III}, 31^{IV}: erstes, zweites, drittes, viertes, fünftes Kippsegment
- 33, 33^{I}, 33", 33^{III}, 33^{IV}: erste, zweite, dritte, vierte, fünfte Lagerfläche
- 37, 37^{I}: Segmentende, insbesondere erstes Segmentende oder zweites Segmentende
- 39, 39^{I}: Segmenteingriff
- 41, 41^{I}, 41" 41^{III}, 41^{IV}: Schmiermittelaustauschvorrichtung
- 43: Boden, insbesondere der Schmiermittelaustauschvorrichtung
- 44: Mittlerer Bereich (von 41)
- 45: Kopf, insbesondere der Schmiermittelaustauschvorrichtung
- 47, 147: Schmiermittelleitleiste
- 49: Zufuhreinrichtung
- 51: Einleitungseinrichtung
- 53: Bohrung
- 55: Schmiermittelkammer, insbesondere Ölkammer
- 57: Abfuhreinrichtung
- 59: Ausleitungskanal
- 61, 161: Schmiermittelablaufschacht, insbesondere Ölablaufschacht
- 63: erster Bereich, insbesondere in der Schmiermittelaustauschvorrichtung
- 65: zweiter Bereich, insbesondere in der Schmiermittelaustauschvorrichtung
- 69: Schmiermittel, insbesondere Schmieröl
- 71, 71^{I}: Kaltschmiermittel, insbesondere kalte Schmieröl
- 73: Warmschmiermittel, insbesondere warme Schmieröl
- 75: Drehrichtung, insbesondere der Welle
- 77, 177: Längsachse, vorzugsweise Rotationsachse
- 79: senkrechte bzw. radiale Richtung
- 181: parallele Richtung, insbesondere zur Längsachse
- 183: Ablassbohrung
- 85: Abstand, insbesondere zwischen Welle und einem Lagerelement, wie z. B. einem Kippsegment oder einer Schmiermittelaustauschvorrichtung
- 87, 87^{I}: Kragen
- 89: Innenkanalwand

- A: Detailkreis

## Patentansprüche

1. Kippsegmentlager (1) zum Lagern einer um eine Längsachse (77; 177) drehbaren Welle (19; 119),
• mit wenigstens zwei in Umfangsrichtung voneinander beabstandeten, von einem Lagergrundkörper (17, 117) umgebenen, Kippsegmenten (31, 31^{I}, 31^{II}, 31^{III}, 31^{IV}), wobei jedes dieser Kippsegmente (31, 31^{I}, 31^{II}, 31^{III}, 31^{IV}) eine Lagerfläche (33, 33^{I}, 33^{II}, 33^{III}, 33^{IV}) für die Lagerung der Welle (19; 119) aufweist,
• mit wenigstens einer zwischen zwei Kippsegmenten (31, 31^{I}, 31^{II}, 31^{III}, 31^{IV}) angeordneten Schmiermittelaustauschvorrichtung (41, 41^{I}, 41^{II}, 41^{III}, 41^{IV}), mit der wenigstens eine Zufuhreinrichtung (49) für das Zuführen eines Kaltschmiermittels (71, 71^{I}) und wenigstens zwei Abfuhreinrichtungen (57) zum Ableiten eines Warmschmiermittels (73) verbunden sind,
• wobei
• die Schmiermittelaustauschvorrichtung (41, 41^{I}, 41^{II}, 41^{III}, 41^{IV}) mittels wenigstens eines Formschlusselements (67) formschlüssig mit wenigstens einer Ausnehmung (27) am Lagergrundkörper (17, 117) verbindbar ist,
• die Schmiermittelaustauschvorrichtung (41, 41^{I}, 41^{II}, 41^{III}, 41^{IV}) mit der in sie integrierten wenigstens einen Zufuhreinrichtung (49) und der in sie integrierten wenigstens einen Abfuhreinrichtung (57) einteilig ausgebildet ist,
• die Zufuhreinrichtung (49) in einem in axialer Richtung gesehen mittleren Bereich (44) der Schmiermittelaustauschvorrichtung (41, 41^{I}, 41^{II}, 41^{III}, 41^{IV}) angeordnet ist und
• zwei Abfuhreinrichtungen (57) in axialer Richtung gesehen zu beiden Seiten des mittleren Bereichs (44) der Schmiermittelaustauschvorrichtung (41, 41^{I}, 41^{II}, 41^{III}, 41^{IV}) angeordnet sind.

2. Kippsegmentlager nach Anspruch 1, **dadurch gekennzeichnet, dass** es zwei gegenüberliegend an einem Boden (43) der Schmiermittelaustauschvorrichtung (41, 41^{I}, 41^{II}, 41^{III}, 41^{IV}) angeordnete rippenförmige Formschlusselemente (67) zum formschlüssigen Eingriff in zwei komplementär dazu geformte Ausnehmungen (27) am Lagergrundkörper (17, 117) aufweist.

3. Kippsegmentlager nach einem der vorhergehenden Ansprüche, **dadurch gekennzeichnet, dass** die Abfuhreinrichtungen (57) einen größeren Querschnitt aufweisen als die Zufuhreinrichtungen (49).

4. Kippsegmentlager nach einem der vorhergehenden Ansprüche, **dadurch gekennzeichnet, dass** an jeder Schmiermittelaustauschvorrichtung (41, 41^{I}, 41^{II}, 41^{III}, 41^{IV}) die Abfuhreinrichtungen (57) in Drehrichtung (75) der Welle (19; 119) den Schmiermittelkammern (55) vorgelagert sind.

5. Kippsegmentlager nach einem der vorhergehenden Ansprüche, **dadurch gekennzeichnet, dass** die Zufuhreinrichtungen (49) mehrere in Richtung zur Welle (19; 119) hin in unterschiedliche Richtungen ausmündende Bohrungen (53) aufweist.

6. Kippsegmentlager nach Anspruch 5, **dadurch gekennzeichnet, dass** die Bohrungen (53) in eine in Richtung der Längsachse (77; 177) verlaufende, in die Schmiermittelaustauschvorrichtung (41, 41^{I}, 41^{II}, 41^{III}, 41^{IV}) integrierte Schmiermittelkammer (55) ausmünden.

7. Kippsegmentlager nach einem der vorhergehenden Ansprüche, **dadurch gekennzeichnet, dass** die Schmiermittelaustauschvorrichtung (41, 41^{I}, 41^{II}, 41^{III}, 41^{IV}) in ihrer axialen Position von wenigstens einem Schmiermittelleitdeckel (3; 9, 109) begrenzt wird.

8. Kippsegmentlager nach Anspruch 7, **dadurch gekennzeichnet, dass** der Schmiermittelleitdeckel (3; 9, 109) wenigstens eine mit der Abfuhreinrichtungen (57) in Verbindung stehende Öffnung (15, 15^{I}, 15^{II}, 15^{III}, 15^{IV}, 15^{V}, 15^{VI}) aufweist.

9. Kippsegmentlager nach einem der vorhergehenden Ansprüche, **dadurch gekennzeichnet, dass** die Zufuhreinrichtung (49) über Bohrungen (182) mit einem umlaufend zentral am Lagergrundkörper (17, 117) ausgebildeten Ringkanal (18) in Verbindung stehen.

10. Kippsegmentlager nach einem der vorhergehenden Ansprüche, **dadurch gekennzeichnet, dass** die Zufuhreinrichtung (49) für ein Überangebot des unter einem Druck zuführbaren Kaltschmiermittels (71, 71^{I}) ausgebildet ist.

11. Kippsegmentlager nach einem der vorhergehenden Ansprüche, **dadurch gekennzeichnet, dass** die Schmiermittelaustauschvorrichtung (41, 41^{I}, 41^{II}, 41^{III}, 41^{IV}) mittels einer integriert an ihr ausgebildeten Schmiermittelleitleiste (47, 147) die Schmiermittelkammer (55) und die Abfuhreinrichtung (57) in einem der Welle (19; 119) zugewandten kopfseitigen Endbereich separiert.

12. Kippsegmentlager nach einem der vorhergehenden Ansprüche, **dadurch gekennzeichnet, dass**
• die Schmiermittelaustauschvorrichtung (41, 41^{I}, 41^{I}, 41^{III}, 41^{IV}) ein radial auf die Welle (19) hin zulaufender Körper ist, und
• an der Schmiermittelaustauschvorrichtung (41, 41^{I}, 41^{II}, 41^{III}, 41^{IV}) ein Schmiermittelablaufschacht (61) ausgebildet ist, durch den das Warmschmiermittel (73) in radialer Richtung (79) nach außen in den Lagergrundkörper (17) hin geleitet wird.

13. Kippsegmentlager nach einem der vorhergehenden Ansprüche, **dadurch gekennzeichnet, dass** der Querschnitt eines einen Teil der Abfuhreinrichtung (57) bildender Ausleitungskanals (59) sich mit zunehmendem radialem Abstand von der Welle (19) vergrößert.

## Claims

1. A tilting pad bearing (1) for supporting a shaft (19; 119) that can rotate about a longitudinal axis (77; 177),
• comprising at least two tilting pads (31, 31^{I}, 31^{II}, 31^{III}, 31^{IV}) mutually spaced apart in the circumferential direction and surrounded by a main bearing body (17; 117), each of these tilting pads (31, 31^{I}, 31^{II}, 31^{III}, 31^{IV}) comprising a bearing surface (33, 33^{I}, 33^{II}, 33^{III}, 33^{IV}) for supporting the shaft (19; 119),
• comprising at least one lubricant-exchanging device (41, 41^{I}, 41^{II}, 41^{III}, 41^{IV}) arranged between two tilting pads (31, 31^{I}, 31^{II}, 31^{III}, 31^{IV}), to which at least one supply means (49) for supplying a cold lubricant (71, 71^{I}) and at least two removal means (57) for removing a warm lubricant (73) are connected,
• the lubricant-exchanging device (41, 41^{I}, 41^{II}, 41^{III}, 41^{IV}) being connectable to at least one recess (27) on the main bearing body (17; 117) by means of at least one form-locking element (67) in a form-locking manner,
• the lubricant-exchanging device (41, 41^{I}, 41^{II}, 41^{III}, 41^{IV}) being formed in one piece with the at least one supply means (49) integrated therein and the at least one removal means (57) integrated therein,
• the supply means (49) being arranged in a region (44) of the lubricant-exchanging device (41, 41^{I}, 41^{II}, 41^{III}, 41^{IV}) which is in the centre when viewed in the axial direction and
• two removal means (57) being arranged on either side of the central region (44) of the lubricant-exchanging device (41, 41^{I}, 41^{II}, 41^{III}, 41^{IV}) when viewed in the axial direction.

2. The tilting pad bearing according to claim 1, **characterized in that** it comprises two rib-shaped form-locking elements (67) arranged so as to be opposite one another on a base (43) of the lubricant-exchanging device (41, 41^{I}, 41^{II}, 41^{III}, 41^{IV}) for the form-locking engagement in two recesses (27) formed so as to be complementary thereto on the main bearing body (17, 117).

3. The tilting pad bearing according to either of the preceding claims, **characterized in that** the removal means (57) have a larger cross-section than the supply means (49).

4. The tilting pad bearing according to any of the preceding claims, **characterized in that**, on each lubricant-exchanging device (41, 41^{I}, 41^{II}, 41^{III}, 41^{IV}), the removal means (57) are mounted upstream of the lubricant chambers (55) in the rotational direction (75) of the shaft (19; 119).

5. The tilting pad bearing according to any of the preceding claims, **characterized in that** the supply means (49) comprise a plurality of bore holes (53) leading towards the shaft (19; 119) in different directions.

6. The tilting pad bearing according to claim 5, **characterized in that** the bore holes (53) lead into a lubricant chamber (55) that extends in the direction of the longitudinal axis (77; 177) and is integrated into the lubricant-exchanging device (41, 41^{I}, 41^{II}, 41^{III}, 41^{IV}).

7. The tilting pad bearing according to any of the preceding claims, **characterized in that** the axial position of the lubricant-exchanging device (41, 41^{I}, 41^{II}, 41^{III}, 41^{IV}) is restricted by at least one lubricant-directing lid (3; 9, 109).

8. The tilting pad bearing according to claim 7, **characterized in that** the lubricant-directing lid (3; 9, 109) comprises at least one opening (15, 15^{I}, 15^{II}, 15^{III}, 15^{IV}, 15^{V}, 15^{VI}) that is connected to the supply means (57).

9. The tilting pad bearing according to any of the preceding claims, **characterized in that** the supply means (49) is connected to an annular channel (18) that is circumferentially centrally formed on the main bearing body (17, 117) by means of bore holes (182).

10. The tilting pad bearing according to any of the preceding claims, **characterized in that** the supply means (49) is designed for a surplus of the cold lubricant (71, 71^{I}) that can be supplied under pressure.

11. The tilting pad bearing according to any of the preceding claims, **characterized in that** the lubricant-exchanging device (41, 41^{I}, 41^{II}, 41^{III}, 41^{IV}), by means of a lubricant-directing strip (47, 147) integrated thereon, separates the lubricant chamber (55) and the removal means (57) in a head-side end region facing the shaft (19; 119).

12. The tilting pad bearing according to any of the preceding claims, **characterized in that**
• the lubricant-exchanging device (41, 41^{I}, 41^{II}, 41^{III}, 41^{IV}) is a body extending radially towards the shaft (19), and
• a lubricant discharge duct (61) is formed on the lubricant-exchanging device (41, 41^{I}, 41^{II}, 41^{III}, 41^{IV}), through which duct the warm lubricant (73) is directed outwards in the radial direction (79) into the main bearing body.

13. The tilting pad bearing according to any of the preceding claims, **characterized in that** the cross section of a distribution canal (59) forming a part of the removal means (57) enlarges as the radial distance from the shaft (19) increases.

## Revendications

1. Palier à segments oscillants (1) destiné à supporter un arbre (19 ; 119) pouvant tourner sur un axe longitudinal (77 ; 177), comprenant
• au moins deux segments oscillants (31, 31^{I}, 31^{II}, 31^{III}, 31^{IV}) espacés l'un de l'autre dans la direction circonférentielle et entourés par un corps de base de palier (17, 117), chacun de ces segments oscillants (31, 31^{I}, 31^{II}, 31^{III}, 31^{IV}) présentant une surface d'appui (33, 33^{I}, 33^{II}, 33^{III}, 33^{IV}) destinée au montage sur palier de l'arbre (19 ; 119),
• au moins un dispositif de remplacement de lubrifiant (41, 41^{I}, 41^{II}, 41^{III}, 41^{IV}) qui est disposé entre deux segments oscillants (31, 31^{I}, 31^{II}, 31^{III}, 31^{IV}) et auquel sont reliés au moins un dispositif d'alimentation (49) destiné à acheminer un lubrifiant froid (71, 71^{I}) et au moins deux dispositifs d'évacuation (57) destiné à évacuer un lubrifiant chaud (73),
• le dispositif de remplacement de lubrifiant (41, 41^{I}, 41^{II}, 41^{III}, 41^{IV}) pouvant être relié par complémentarité de formes à au moins un évidement (27) du corps de base de palier (17, 117) au moyen d'au moins un élément de liaison par complémentarité de formes (67),
• le dispositif de remplacement de lubrifiant (41, 41^{I}, 41^{II}, 41^{III}, 41^{IV}) étant formé d'une seul pièce avec l'au moins un dispositif d'alimentation (49) intégré dans celui-ci et l'au moins un dispositif d'évacuation (57) intégré dans celui-ci,
• le dispositif d'alimentation (49) étant disposé dans une région centrale (44) du dispositif de remplacement de lubrifiant (41, 41^{I}, 41^{II}, 41^{III}, 41^{IV}) en référence à la direction axiale, et
• deux dispositifs d'évacuation (57) étant disposés des deux côtés de la zone centrale (44) du dispositif de remplacement de lubrifiant (41, 41^{I}, 41^{II}, 41^{III}, 41^{IV}) en référence à la direction axiale.

2. Palier à segments oscillants selon la revendication 1, **caractérisé en ce qu'**il comporte, au niveau du corps de base de palier (17, 117), deux éléments de liaison par complémentarité de formes (67) en forme de nervures (67) disposés l'un en face de l'autre sur un fond (43) du dispositif de remplacement de lubrifiant (41, 41^{I}, 41^{II}, 41^{III}, 41^{IV}) et destinés l'engagement par complémentarité de fors dans deux évidements (27), de forme complémentaire de celle des évidements, .

3. Palier à segments oscillants selon l'une des revendications précédentes, **caractérisé en ce que** les dispositifs d'évacuation (57) ont une section transversale supérieure à celle des dispositifs d'alimentation (49).

4. Palier à segments oscillants selon l'une des revendications précédentes, **caractérisé en ce que**, sur chaque dispositif de remplacement de lubrifiant (41, 41^{I}, 41^{II}, 41^{III}, 41^{IV}), les dispositifs d'évacuation (57) sont montés en amont des chambres de lubrifiant (55) en référence au sens de rotation (75) de l'arbre (19 ; 119).

5. Palier à segments oscillants selon l'une des revendications précédentes, **caractérisé en ce que** les dispositifs d'alimentation (49) comportent plusieurs alésages (53) qui débouchent dans différentes directions en direction de l'arbre (19 ; 119).

6. Palier à segments oscillants selon la revendication 5, **caractérisé en ce que** les alésages (53) débouchent dans une chambre de lubrifiant (55) qui s'étend dans la direction de l'axe longitudinal (77 ; 177) et qui est intégrée dans le dispositif de remplacement de lubrifiant (41, 41^{I}, 41^{II}, 41^{III}, 41^{IV})

7. Palier à segments oscillants selon l'une des revendications précédentes, **caractérisé en ce que** le dispositif de remplacement de lubrifiant (41, 41^{I}, 41^{II}, 41^{III}, 41^{IV}) est délimité dans sa position axiale par au moins un couvercle de guidage de lubrifiant (3 ; 9, 109).

8. Palier à segments oscillants selon la revendication 7, **caractérisé en ce que** le couvercle de guidage de lubrifiant (3 ; 9, 109) comporte au moins une ouverture (15, 15^{I}, 15^{II}, 15^{III}, 15^{IV}, 15^{V}, 15^{VI}) qui est reliée aux dispositifs d'évacuation (57).

9. Palier à segments oscillants selon l'une des revendications précédentes, **caractérisé en ce que** le dispositif d'alimentation (49) est relié par des alésages (182) à un conduit annulaire (18) formé circonférentiellement au centre du corps de base de palier (17, 117).

10. Palier à segments oscillants selon l'une des revendications précédentes, **caractérisé en ce que** le dispositif d'alimentation (49) est conçu pour acheminer en excès du lubrifiant froid (71, 71^{I}) qui peut être amené sous pression.

11. Palier de segments oscillants selon l'une des revendications précédentes, **caractérisé en ce que** le dispositif de remplacement de lubrifiant (41, 41^{I}, 41^{II}, 41^{III}, 41^{IV}) sépare la chambre de lubrifiant (55) et le dispositif d'évacuation (57) dans une zone d'extrémité côté tête tournée vers l'arbre (19 ; 119) au moyen d'une bande de guidage de lubrifiant (47, 147) formée de manière intégrée au dispositif de remplacement de lubrifiant.

12. Palier à segments oscillants selon l'une des revendications précédentes, **caractérisé en ce que**
• le dispositif de remplacement de lubrifiant (41, 41^{I}, 41^{II}, 41^{III}, 41^{IV}) est un corps s'étendant radialement vers l'arbre (19), et
• le dispositif de remplacement de lubrifiant (41, 41^{I}, 41^{II}, 41^{III}, 41^{IV}) est muni d'un puits d'écoulement de lubrifiant (61) à travers lequel le lubrifiant chaud (73) est guidé radialement (79) vers l'extérieur jusque dans le corps de base de palier (17).

13. Palier à segments oscillants selon l'une des revendications précédentes, **caractérisé en ce que** la section transversale d'un conduit de déviation (59) formant une partie du dispositif d'évacuation (57) augmente à mesure que la distance radiale à l'arbre (19) augmente.
